# EUROPEAN PATENT SPECIFICATION

(11) **EP 2 846 886 B1**
(45) Date of publication and mention of the grant of the patent: **31.08.2016**
(21) Application number: 13863238.5
(22) Date of filing: 09.12.2013
(51) Int. Cl.: A63D 9/00

(54) **METHOD FOR MANUFACTURING BOWLING PIN, AND PIN**
VERFAHREN ZUR HERSTELLUNG EINES BOWLINGKEGELS UND KEGEL
PROCÉDÉ DE FABRICATION DE QUILLE, ET QUILLE

(30) Priority: 11.12.2012 FI 20126289
(43) Date of publication of application: 18.03.2015
(73) Proprietor: Rinotop Oy, 01800 Klaukkala (FI)
(72) Inventor: KERBS, Kaj, FI-01800 Klaukkala (FI); KANNISTO, Kari, FI-01800 Klaukkala (FI); MAJA, Juha, FI-01800 Klaukkala (FI)
(74) Representative: Kolster Oy Ab
(86) International application number: PCT/FI2013/051147
(87) International publication number: WO 2014/091075

(56) References cited:
- FR-A- 1 315 425
- JP-A- S4 830 540
- KR-B1- 100 549 405
- KR-B1- 100 549 405
- US-A- 2 942 885
- US-A- 2 942 885
- US-A- 3 025 061
- US-A- 3 044 777
- US-A- 3 092 386
- US-A- 3 201 124
- US-A- 3 201 124
- US-A- 3 445 113
- US-A- 4 104 352
- US-A- 4 351 530

## Description

### Background

The invention relates to a method for manufacturing a bowling pin, and a pin manufactured by the method.

Ten-pin bowling is an extremely popular sport and hobby all over the world. Conventionally, the pins used in such bowling have been made of wood, which is coated with plastic. Pins used in competitive bowling have to meet the standards set by the United States Bowling Congress or USBC.

The problem with pins made of wood is that a high-quality wood material is expensive and that the properties of wood vary greatly, which is why the properties of the pins vary at random. US 2 942 885 discloses a bowling pin comprising an outer shell which is formed essentially by axially extending shell members which are secured together along axially extending edges thereof. The outer shell defines an axially extending cavity within the pin, and a core member, which serves to reinforce the shell, is positioned within the cavity. The outer shell is made of plastic material. US 3201 124 discloses a composite bowling pin structure comprising a plurality of tandemly arranged shape retaining sections of molded synthetic resin composition, including a head section, an intermediate section and a base section. The material of the pin is synthetic resin injection molding plastic composition. US 4104352 discloses a method of making a hollow bowling pin comprising a base, body and cap wherein at least said body is composed of a thermoset composition, and said base and cap are composed of a thermoset or thermoplastic composition.

### Brief description

The method according to the invention for manufacturing a bowling pin is defined by claim 1.

According to an idea, the method for manufacturing a bowling pin is characterized by manufacturing, by injection moulding, at least two parts of a pin body which, once fastened together, form an outer surface of the pin-shaped body and an interior within the body, and using plastic or a mixture comprising plastic as a material for said body parts.

An advantage is, inter alia, that the properties of a pin may be determined accurately already while manufacturing the pin.

The idea of an embodiment is that the plastic is a thermoplastic. The advantage is that the material may be recyclable.

According to an aspect the mixture comprising plastic contains wood fibre, most preferably hardwood fibre. The advantage is that no suction or at least no substantial suction occurs in the moulding.

The idea of an embodiment is that 20 to 60 percent by weight, preferably 30 to 40 percent by weight, of the mixture is natural fibre. The advantage is that it is possible to make the properties of the pin, e.g. the sound generated upon impact of the bowling ball, similar to those of a wooden pin.

The idea of an embodiment is that at least two body parts are manufactured so that their division plane is horizontal with respect to a complete pin, and that the horizontal division plane resides higher or lower than an impact plane of a bowling ball. The advantage is that the strain caused by the impact of the bowling ball may be reduced when diverted into a seam in the division plane.

The idea of an embodiment is that two body parts are manufactured so that their division plane is vertical with respect to the complete pin. The advantage is that the mould is easy to manufacture.

The idea of an embodiment is that one or more mass pieces are manufactured, the mass pieces being arrangeable in the interior of the body. The advantage is that the pin may be provided with more mass.

The idea of an embodiment is that one or more mass pieces are manufactured, and the mass pieces are arranged in a mould that moulds a body part prior to injecting the mixture forming said body part into the mould. The advantage is simplicity of manufacture.

The idea of an embodiment is that the outer surface of the body parts connected to one another is coated with a coating layer. The advantage is that this enables the properties, such as a friction coefficient, of the surface of the pin to be modified.

The idea of an embodiment is that at least a portion of the interior is filled with a filling fluid immediately prior to putting the pin into use. The advantage is that it is possible to reduce the mass of pins to be transported, which reduces the transportation costs of the pins.

### Brief description of the figures

The matter is now described in closer detail in connection with preferred embodiments and with reference to the accompanying drawings, in which
Figure 1 schematically shows a method for manufacturing a bowling pin,
Figure 2 is a schematic, sectioned side view showing a pin manufactured by the method according to Figure 1, and
Figure 3 schematically shows another method for manufacturing a bowling pin.

For the sake of clarity, the figures show the matter in a simplified manner. In the figures, like reference numerals identify like elements.

### Detailed description

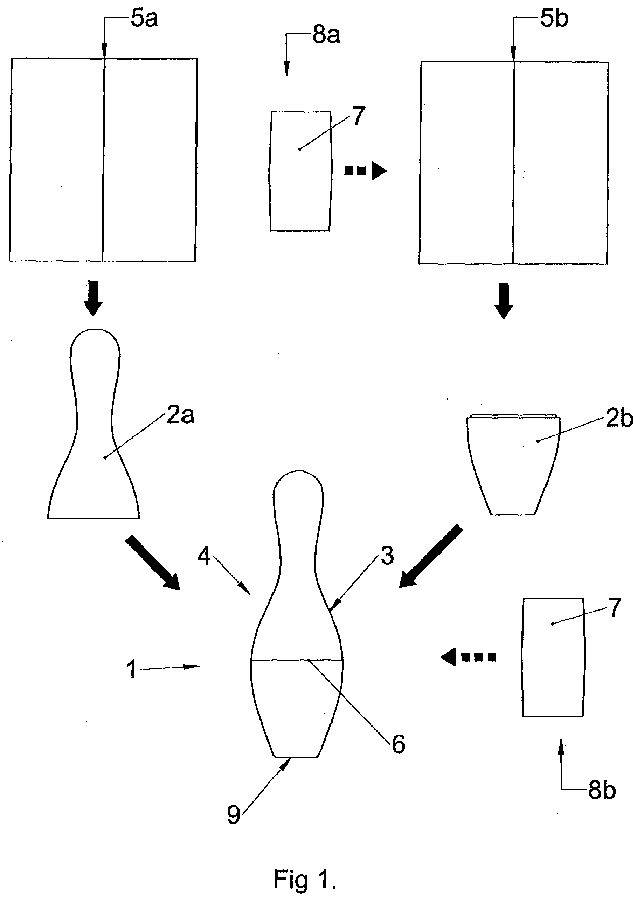

Figure 1 schematically shows a method for manufacturing a bowling pin. It is to be noted that the concept "pin" in the present description refers to a pin used in ten-pin bowling.

In the method, the pin 1 is manufactured by injection moulding two parts 2a, 2b of a body of the pin. A first part 2a of the body is injection-moulded in a first mould 5a and, correspondingly, a second part 2b in a second mould 5b. It is to be noted in this connection that the body of the pin may even be formed of more than two body parts.

The injection moulds 5a, 5b may be implemented in manners of implementation of injection moulds known per se. They may comprise, inter alia, cores or the like.

The body parts 2a, 2b, once fastened together, form an outer surface 3 of the pin-shaped body and an interior 4 within the body.

The material used for the body parts 2a, 2b is plastic or a mixture comprising plastic. According to an idea, the plastic comprises a thermoplastic, which is e.g. polyolefin, such as polyethene PE or polypropylene PP, or another thermoplastic, such as polyoxymethylene POM, polystyrene PS, acryl-butadiene-styrene ABS or polyamide PA, etc. Typical advantages of a thermoplastic are weldability and easy manufacturability.

According to an idea, the mixture comprising plastic contains wood fibre, which is most preferably made of hardwood. The light colour of hardwood is an advantageous feature in terms of colourability of the material. In addition, hardwood fibre is typically more resistant to heat than softwood fibre, for instance. Of course, the natural fibre may comprise softwood fibre, flax fibre, hemp fibre, etc.

The proportion of natural fibre in the mixture is preferably 20 to 60 percent by weight, more preferably 30 to 40 percent by weight.

An advantage of plastic filled with natural fibre is, inter alia, its low tendency to form suction while the mixture is cooling down. Because of this property, it is possible to make the surfaces of the body part 2a, 2b of the pin high in quality even if the wall thickness were great. A further advantage is good impact resistance of the material, which makes the life of the pin long. A still further advantage is that natural fibre brings the properties of the pin 1 closer to those of a pin made of wood. Therefore, the properties of the pin closely resemble those of a wooden pin. Consequently, it is quite simple to manufacture from the material pins that meet the requirements set by the USBC, for instance. It is, of course, also possible to manufacture pins of another kind, i.e. pins that are not in accordance with the standards set by the USBC.

By using natural fibre, it is also possible to replace a plastic material, which reduces the raw material costs of the pin.

According to another idea, the plastic comprises a thermosetting plastic, e.g. polyurethane PU. The thermosetting plastic may be filled with natural fibre as already disclosed above. Typically, the advantage of a thermosetting plastic is good resistance to impact and wear.

The material for manufacturing the body parts 2a, 2b may naturally also contain other components, such as mineral fillers, colouring agents, injection moulding process aids, such as release agents, etc.

One body part 2a, 2b may be made of a different material than the other part 2a, 2b: the materials may e.g. have a different density or the like.

In Figure 1, the body parts 2a, 2b to be manufactured are formed such that the division plane 6 therebetween is horizontal with respect to the complete pin 1. In other words, the first part 2a forms an upper part of the pin 1 while the second part 2b forms a lower part of the pin 1. It is also possible to form the parts 2a, 2b and arrange the division plane 6 in a different manner. Further below in this description, a solution is disclosed wherein the division plane is vertical; in addition, the division plane 6 may be arranged obliquely with respect to the horizontal and vertical direction, or it may comprise parts that are arranged in mutually parallel or mutually intersecting spatial planes. It can be stated that the division plane may be of any form, being only restricted by matters relating to manufacture.

In addition to the body parts 2a, 2b, the method may comprise manufacturing one or more mass pieces 7. Such a mass piece 7 may be manufactured e.g. from the aforementioned materials used in the manufacture of the body parts: not, however, necessarily from a material having exactly the same components as that used for the body parts 2a, 2b in question. The mass piece 7 may also be manufactured from another kind of material based on plastic, plastic composite, metal or ceramic, for instance.

The mass piece 7 may be manufactured e.g. by injection moulding, compression or some other manufacturing method known per se.

Figure 1 shows two alternatives for arranging the mass piece 7 in the pin 1: in a first method alternative 8a, the mass piece 7 is arranged in a mould 5b prior to injecting a mixture forming a body part into the mould 5b. Of course, the mass piece may be arranged in a first mould 5a, or mass pieces may be arranged in both moulds.

In a second method alternative 8b, the mass piece 7 is arranged in the interior 4 of the body. This arranging may be carried out either prior to fastening the body parts 2a, 2b to one another, or only after said fastening to one another has been performed. In the latter embodiment, the outer surface 3 of the body of the pin comprises an opening via which the mass piece may be arranged in the interior 4. The opening may be arranged in a bottom 9 of the pin, for instance.

The mass piece 7 enables the mass of the pin 1 to be made as desired.

The body parts 2a, 2b may be fastened to one another in numerous ways. They may for instance be glued or welded together, or a mechanical fastening, e.g. a crimp connection or a threaded connection, or different combinations thereof, may be used.

It is also possible to afterwards re-coat the pin 1 and/or apply a substance of the same or different material in order to enable the surface of a used and damaged pin to be made even again.

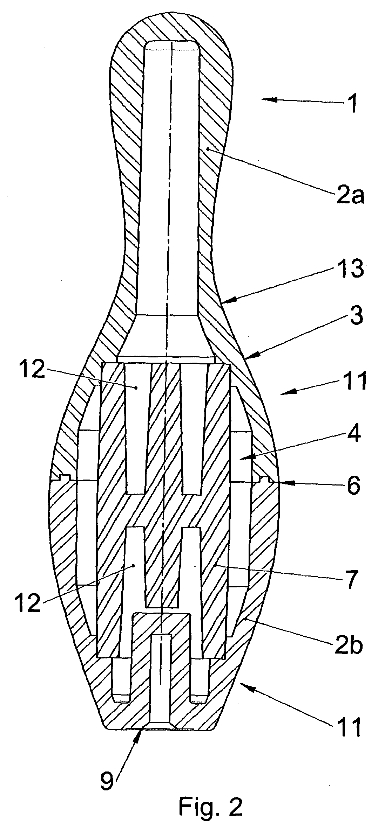

Figure 2 is a schematic, sectioned side view showing a pin manufactured by the method according to Figure 1.

The body parts 2a, 2b are preferably manufactured so that the division plane 6 therebetween resides higher or lower than the impact plane of a bowling ball. Thus, the impacts of the bowling ball are not directly directed at a joint in the division plane 6. The horizontal division plane 6 may, of course, also be arranged in the impact plane of the bowling ball.

The division plane 6 may for instance be provided with a groove and a corresponding projection, i.e. a tongue-and-groove joint 10, or other corresponding forms which contribute to making the fastening between the body parts 2a, 2b stronger.

The pin 1 comprises an interior 4, which is closed, in other words it has no connection to the outer surface 3 of the body of the pin. Inner forms of the body parts 2a, 2b necessary for forming the interior 4 may be manufactured in moulds by means of a moving core, for instance.

The mass piece 7 is arranged in the interior 4, which may be provided with fit forms 11 to keep the mass pieces 7 in place. In its external form, the mass piece 7 is a cylindrical injection-moulded piece which comprises oppositely arranged annular grooves 12. The grooves 12 make the mass piece faster to cool down.

The mass piece 7 may be part of the fastening system of the body parts. It may e.g. be glued to the body parts 2a, 2b and/or it may comprise forms so as to produce form locking or a crimp connection with the body parts 2a, 2b.

The outer surface 3 of the body may be coated with a coating layer 13, which may consist e.g. of a thermoplastic or a thermosetting plastic. The coating layer may comprise e.g. Surlyn®, Teflon®, or polyurethane. It is possible through the choice of material for the surface of the pin to substantially influence the behaviour of the pin upon impact with the bowling ball.

The material constituting the coating layer may comprise a colouring agent. Typically, a pin is white in colour, but this is not the only colour alternative for a pin. The outer surface 3 may be of one or more colours. The colouring agent may comprise components which, upon exposure to UV light, emit a certain visual effect. Such an effect may be particularly attractive in glow bowling.

The coating layer may comprise soil repellent, e.g. photoactive, components.

The coating layer 13 may have a constant thickness or it may have areas of different thicknesses. According to an idea, within the area of the impact point of the bowling ball the coating layer 13 is thicker than elsewhere. The coating layer 13 may be made of the same material throughout, or of a different material in different parts of the pin 1. The coating layer 13 may comprise one or more layers of different material. The purpose of the coating layer 13 may be e.g. to influence the appearance of the pin, protect the body of the pin, and/or affect the frictional properties of the outer surface of the pin. The coating layer 13 and/or the outer surface 3 of the body of the pin may comprise patterns, recesses, protrusions, etc.

The bottom 9 of the pin may also be provided with different patterns or different coatings in order to change the friction between the bottom and a bowling lane.

The pin 1 shown in Figure 2 is manufactured so as to have no separate bottom ring. This makes the process for manufacturing the pin simpler. In the known pins made of wood, the bottom ring protects the lower part and bottom of the pin. No such protection is necessary when materials disclosed in this description are used. Of course, it is possible to use a separate bottom ring also in the present pins.

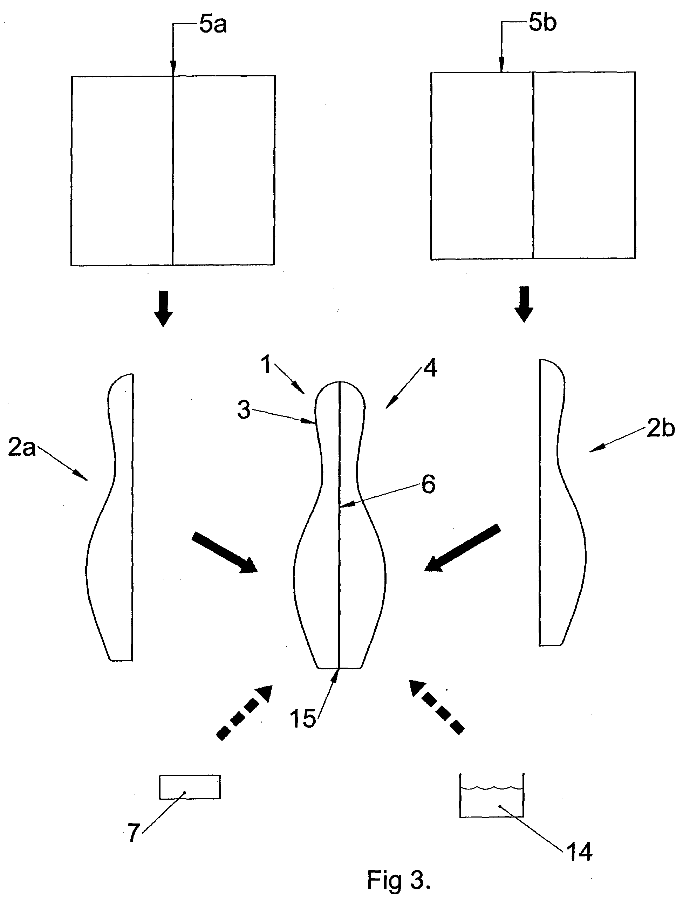

Figure 3 schematically shows another method for manufacturing a bowling pin.

The body parts 2a, 2b of the pin are injection-moulded in two different moulds 5a, 5b. The manufacturing material may be as already described above. The division plane 6 of the body parts 2a, 2b is now vertical with respect to the complete pin 1.

Prior to fastening the body parts 2a, 2b to one another, a mass piece 7 may be arranged therebetween such that it remains in the interior 4 of the pin. The fastening of the parts as well as the properties of the mass piece have already been discussed above in this description.

According to a second idea, one or more mass pieces 7 are arranged in one or more moulds 5a, 5b prior to moulding.

According to a third idea, no mass piece is arranged in the interior 4. Instead, the parts 2a, 2b are fastened to one another, and a filling fluid 14 is dispensed into the interior 4. For the dispensing, the pin 1 is provided with a filling aperture or channel 15 to the interior, preferably arranged either in the bottom 9 of the pin or an upper end of the pin.

The filling fluid 14 may be e.g. a plastic which sets within the interior and which may solidify into a foam or a solid. Consequently, the filling fluid may be at least substantially the same as the manufacturing material of the body parts 2a, 2b. The filling fluid 14 may also remain unsolidified, in which case it is liquid, e.g. water, or gelatinous. In such a case, the filling channel 15 is closed after filling in order to prevent the filling fluid 15 from leaking out of the pin 1. The filling fluid 14 may fill the interior 4 completely or partly. The filling of the pin 1 with the filling fluid 14 may be carried out as late as immediately prior to putting the pin into use. This makes it possible to reduce the mass of the pins 1 to be transported.

According to yet another idea, the pin comprises both a mass piece 7 and filling fluid 14.

It is to be noted that the use of the filling fluid 14 described herein is also suitable for use in pins wherein the division plane 6 is horizontal or otherwise different from the vertical one.

In some cases, features disclosed in this application may be used as such, regardless of other features. On the other hand, when necessary, features disclosed in this application may be combined in order to provide different combinations.

The drawings and the related description are only intended to illustrate the idea of the invention. It is apparent to a person skilled in the art that the invention is not restricted to the embodiments described above, in which the invention is described by means of some examples, but many modifications and different embodiments of the invention are possible within the scope of the inventive idea defined in the following claims.

### Reference numerals

- 1: pin
- 2a, b: part of pin body
- 3: outer surface of body
- 4: interior
- 5a, b: mould
- 6: division plane
- 7: mass piece
- 8a, b: method alternative
- 9: bottom of pin
- 10: tongue-and-groove joint
- 11: fit form
- 12: groove of mass piece
- 13: covering layer
- 14: filling fluid
- 15: filling channel
- 16: thread part
- 17: mating thread
- 18: neck of pin
- 19: mating base
- 20: opening of interior

## Claims

1. A method for manufacturing a bowling pin, the method comprising:
manufacturing, by injection moulding, at least two parts (2a, 2b) of a pin body which, once fastened together, form an outer surface (3) of the pin-shaped body and an interior (4) within the body,
using plastic or a mixture comprising plastic as a material for said body parts (2a, 2b),
arranging in the interior (4) of the body one or more mass pieces (7), and arranging the mass piece (7) to fasten said body parts (2a, 2b) to one another, **characterized in that**
the mixture comprising plastic comprises wood fibre, preferably hardwood fibre.

2. A method as claimed in claim 1, **characterized in that** the plastic is a thermoplastic.

3. A method as claimed in claim 1 or 2, **characterized in that** the plastic comprises polyolefin, for example polyethene PE and/or polypropylene PP, or polyoxymethylene POM, polystyrene PS, acryl-butadiene-styrene ABS, polyamide PA or polyurethane PU.

4. A method as claimed in any one of the preceding claims, **characterized in that** 20 to 60 percent by weight, preferably 30 to 40 percent by weight, of the mixture is natural fibre.

5. A method as claimed in any one of the preceding claims, **characterized in that** at least two body parts (2a, 2b) are manufactured so that their division plane (6) is horizontal with respect to a complete pin (1).

6. A method as claimed in claim 5, **characterized in that** the body parts (2a, 2b) are manufactured so that the horizontal division plane (6) resides higher or lower than an impact plane of a bowling ball.

7. A method as claimed in any one of claims 1 to 4, **characterized in that** two body parts (2a, 2b) are manufactured so that their division plane (6) is vertical with respect to the complete pin (1).

8. A method as claimed in any one of the preceding claims, **characterized in that** the mass piece (7) is glued to the body parts (2a, 2b).

9. A method as claimed in any one of the preceding claims, **characterized in that** the mass piece (7) is formed so as to produce form locking or a crimp connection with the body parts (2a, 2b).

10. A method as claimed in any one of the preceding claims, **characterized in that** the mass piece (7) is arranged in a mould (5a, 5b) that moulds a body part prior to injecting the mixture forming said body part (2a, 2b) into the mould (5a, 5b).

11. A method as claimed in any one of the preceding claims, **characterized in that** the outer surface (3) of the body parts (2a, 2b) connected to one another is coated with a coating layer (13).

12. A method as claimed in any one of the preceding claims, **characterized in that** at least a portion of the interior (4) is filled with a filling fluid (14).

13. A bowling pin, **characterized in that** it is manufactured by a method according to any one of the preceding claims.

## Patentansprüche

1. Verfahren zur Herstellung eines Bowling-Kegels, umfassend:
Fertigung, durch Spritzgießen, mindestens zweier Teile (2a, 2b) eines Kegelkörpers, welche, einmal aneinander befestigt, eine Außenfläche (3) des kegelförmigen Körpers und einen Innenraum (4) innerhalb des Körpers bilden,
unter Verwendung von Kunststoff oder einer Kunststoff umfassenden Mischung als ein Material für besagte Teile des Körpers (2a, 2b)
Anordnen eines oder mehrerer Massenstücke (7) in dem Innenraum (4) des Körpers, und Anordnen des Massenstücks (7) um die Teile des Körpers (2a, 2b) aneinander zu befestigen, **dadurch gekennzeichnet, dass**
die Kunststoff umfassende Mischung Holzfasern, vorzugsweise Hartholzfasern, umfasst.

2. Ein Verfahren wie beansprucht in Anspruch 1, **dadurch gekennzeichnet, dass** der Kunststoff ein Thermoplast ist.

3. Ein Verfahren wie beansprucht in Anspruch 1 oder 2, **dadurch gekennzeichnet dass** der Kunststoff Polyolefin umfasst, zum Beispiel Polyethylen PE und/oder Polypropylen PP, oder Polyoxymethylen POM, Polystyrol PS, Acryl-Butadien-Styrol ABS, Polyamide PA oder Polyurethan PU.

4. Ein Verfahren wie beansprucht in einem der vorangehenden Ansprüche, **dadurch gekennzeichnet, dass** 20 bis 60 Gewichtsprozent, vorzugsweise 30 bis 40 Gewichtsprozent, der Mischung Naturfaser sind.

5. Ein Verfahren wie beansprucht in einem der vorangehenden Ansprüche, **dadurch gekennzeichnet, dass** zumindest zwei Teile des Körpers (2a, 2b) so hergestellt werden, dass ihre Unterteilungsebene (6) im Hinblick auf einen vollständigen Kegel (1) horizontal ist.

6. Ein Verfahren wie beansprucht in Anspruch 5, **dadurch gekennzeichnet, dass** zumindest zwei Teile des Körpers (2a, 2b) so hergestellt werden, dass ihre horizontale Unterteilungsebene (6) oberhalb oder unterhalb einerAufprallebene einer Bowlingkugel liegt.

7. Ein Verfahren wie beansprucht in einem der Ansprüche 1 bis 4, **dadurch gekennzeichnet, dass** zumindest zwei Teile des Körpers (2a, 2b) so hergestellt werden, dass ihre Unterteilungsebene (6) im Hinblick auf einen vollständigen Kegel (1) vertikal ist.

8. Ein Verfahren wie beansprucht in einem der vorangehenden Ansprüche, **dadurch gekennzeichnet, dass** das Massenstück (7) mit den Teilen des Körpers (2a, 2b) verklebt ist.

9. Ein Verfahren wie beansprucht in einem der vorangehenden Ansprüche, **dadurch gekennzeichnet, dass** das Massenstück (7) so geformt ist, dass es eine Verriegelungs- oder Quetschverbindung mit den Teilen des Körpers (2a, 2b) bewirkt.

10. Ein Verfahren wie beansprucht in einem der vorangehenden Ansprüche, **dadurch gekennzeichnet, dass** das Massenstück (7) in einer Gussform (5a, 5b) zum Formen eines Körperteils angeordnet wird, bevor die Mischung, die besagten Körperteil (2a, 2b) bildet, in die Gussform (5a, 5b) eingespritzt wird.

11. Ein Verfahren wie beansprucht in einem der vorangehenden Ansprüche, **dadurch gekennzeichnet, dass** die äußere Oberfläche (3) der miteinander verbundenen Teile des Körpers (2a, 2b) mit einer Beschichtung (13) beschichtet ist.

12. Ein Verfahren wie beansprucht in einem der vorangehenden Ansprüche, **dadurch gekennzeichnet dass** zumindest ein Teil des Inneren (4) mit einer Füllflüssigkeit gefüllt (14) ist.

13. Ein Bowling-Kegel, **dadurch gekennzeichnet dass** er nach einem Verfahren wie beansprucht in einem der vorangehenden Ansprüche hergestellt ist.

## Revendications

1. Procédé de fabrication d'une quille, le procédé comprenant :
la fabrication, par injection-moulage, d'au moins deux parties (2a, 2b) d'un corps d'axe qui, une fois fixés ensemble, forment une surface extérieure (3) d'un corps en forme de quille et un espace intérieur (4) à l'intérieur du corps,
l'utilisation de plastique ou d'un mélange comprenant du plastique comme matière pour lesdites parties de corps (2a, 2b),
l'agencement dans l'espace intérieur (4) du corps d'une ou de plusieurs pièces de masse (7), et l'agencement de la pièce de masse (7) pour fixer lesdites parties de corps (2a, 2b) entre elles, **caractérisé en ce que**
le mélange comprenant du plastique comprend des fibres de bois, de préférence des fibres de bois durs.

2. Procédé selon la revendication 1, caractérisé le plastique est un thermoplastique.

3. Procédé selon la revendication 1 ou 2, **caractérisé en ce que** le plastique comprend une polyoléfine, par exemple du polyéthylène PE et/ou du polypropylène PP, ou du polyoxyméthylène POM, du polystyrène PS, de l'acrylonitrile butadiène styrène ABS, du polyamide PA ou du polyuréthane PU.

4. Procédé selon l'une des revendications précédentes, **caractérisé en ce que** 20 à 60 pourcent en poids, préférentiellement de 30 à 40 pourcent en poids, du mélange consiste en des fibres naturelles.

5. Procédé selon l'une des revendications précédentes, **caractérisé en ce que** au moins les deux parties de corps (2a, 2b) sont fabriquées de sorte que leur plan de symétrie (6) est horizontal par rapport à une quille entière (1).

6. Procédé selon la revendication 5, **caractérisé en ce que** les parties de corps (2a, 2b) sont fabriquées de sorte que le plan de symétrie horizontal (6) se situe plus haut ou plus bas que le plan d'impact d'une boule de bowling.

7. Procédé selon l'une des revendications 1 à 4, **caractérisé en ce que** les deux parties de corps (2a, 2b) sont fabriquées de sorte que leur plan de symétrie (6) est vertical par rapport à la quille entière (1).

8. Procédé selon l'une des revendications précédentes, **caractérisé en ce que** la pièce de masse (7) est collée aux parties de corps (2a, 2b).

9. Procédé selon l'une des revendications précédentes, **caractérisé en ce que** la pièce de masse (7) est formée afin de produire un verrouillage de forme ou une connexion d'accrochage avec les parties de corps (2a, 2b).

10. Procédé selon l'une des revendications précédentes, **caractérisé en ce que** la pièce de masse (7) est disposée dans un moule (5a, 5b) qui moule une partie de corps avant d'injecter le mélange formant ladite partie de corps (2a, 2b) dans le moule (5a, 5b).

11. Procédé selon l'une des revendications précédentes, **caractérisé en ce que** la surface extérieure (3) des parties de corps (2a, 2b) connectées l'une à l'autre est revêtue avec une couche de revêtement (13).

12. Procédé selon l'une des revendications précédentes, **caractérisé en ce que** au moins une portion de l'espace intérieur (4) est remplie avec un fluide de remplissage (14).

13. Quille, **caractérisée en ce qu'**elle est fabriquée par un procédé selon l'une quelconque des revendications précédentes.
